# EUROPEAN PATENT SPECIFICATION

(11) **EP 3 030 068 B1**
(45) Date of publication and mention of the grant of the patent: **13.01.2021**
(21) Application number: 14780577.4
(22) Date of filing: 05.08.2014
(51) Int. Cl.: A01B 73/04, A01B 59/06, A01B 63/108, A01B 29/04

(54) **AGRICULTURAL APPARATUS**
LANDWIRTSCHAFTLICHE VORRICHTUNG
APPAREIL AGRICOLE

(30) Priority: 06.08.2013 IT VR20130189
(43) Date of publication of application: 15.06.2016
(73) Proprietor: Pizzocolo, Fabio, 25017 Lonato del Garda (IT)
(72) Inventor: Pizzocolo, Fabio, 25017 Lonato del Garda (IT)
(74) Representative: Modiano, Micaela Nadia
(86) International application number: PCT/IB2014/063701
(87) International publication number: WO 2015/019280

(56) References cited:
- EP-A2- 0 432 815
- EP-A2- 2 324 693
- FR-A1- 2 646 052
- GB-A- 2 187 627

## Description

The present invention relates to an agricultural apparatus.

As is known, the harrow is an agricultural tool intended to complete the work of a plow and, in particular, to flatten and break up the loosened soil, which often is in clods of considerable size.

Harrows are classified on the basis of the characteristics of the frame and of the working elements.

Known harrows, be they of the rigid-frame, articulated, rotary-elements, combined or controlled-tools type, are connected in a rearward position to the farming tractor and are towed on the previously plowed soil. The documents GB 2 187 627 A, EP 0 432 815 A2, FR 2 646 052 A1 and EP 2 324 693 A2 describe known farming machines, comprising a tractor associated, at the front region, with an agricultural apparatus.

It is thus evident that it is necessary to first plow the piece of land and then pass over the plowed soil again to break it up with the harrow.

This entails, obviously, an expenditure of time and of use of the tractor and also, during travel over the plowed soil with the harrow, a compression of the freshly plowed soil, compromising in some cases the work just carried out.

The aim of the present invention is to provide an agricultural apparatus capable of eliminating the drawbacks noted above.

Within this aim, an important object of the present invention is to provide an agricultural apparatus that allows to plow and flatten the soil in significantly shorter times.

Another object of the invention is to provide an agricultural apparatus that spares the tractor from passing with its wheels on the already plowed soil.

Another object of the invention is to provide an agricultural apparatus that has a very simple structure and has a competitive production cost, so that its use is advantageous also from an economic standpoint.

This aim as well as these and other objects that will become better apparent hereinafter are achieved by an agricultural apparatus and by an agricultural machine according to what is indicated in the independent appended claim 1.

Further characteristics and advantages of the invention will become better apparent from the description of some preferred but not exclusive embodiments of an agricultural apparatus according to the present invention, illustrated by way of non-limiting example in the accompanying drawings, wherein:
Figure 1 is a front elevation view of a farming machine associated with an agricultural apparatus according to the invention with the working body in a first condition of use;
Figure 2 is a view, similar to Figure 1, but with the working body in a second condition of use;
Figure 3 is a front view of a farming machine associated with a rotary harrow according to the invention with the working body in an intermediate position.

In the examples of embodiment that follow, individual characteristics, given in relation to specific examples, may actually be interchanged with other different characteristics that exist in other examples of embodiment.

With reference to the figures cited above, the agricultural apparatus according to the agricultural apparatus of the present invention is generally designated by the reference numeral 1.

According to the present invention, the agricultural apparatus 1 comprises a supporting structure 2, which is associated with a coupling portion 3 defined at the front region 10a of a farming tractor 10. According to the present invention, the supporting structure 2 supports, so that it can rotate about a rotation axis 100, at least one working body 4. According to the present invention, the rotation axis 100 is extended, at least in one condition of use of the agricultural apparatus 1, substantially parallel to the ground to be worked and substantially at right angles to the advancement direction of the farming tractor 10.

According to the present invention, the working body 4 comprises at least one active portion 4a arranged laterally to the farming tractor 10.

According to the present invention, the active portion 4a has a substantially cylindrical elongated shape that is extended longitudinally and substantially parallel to the rotation axis 100.

In practice, the active portion 4a is provided with elements that are extended parallel to the axis 100 and are rotated about said axis 100.

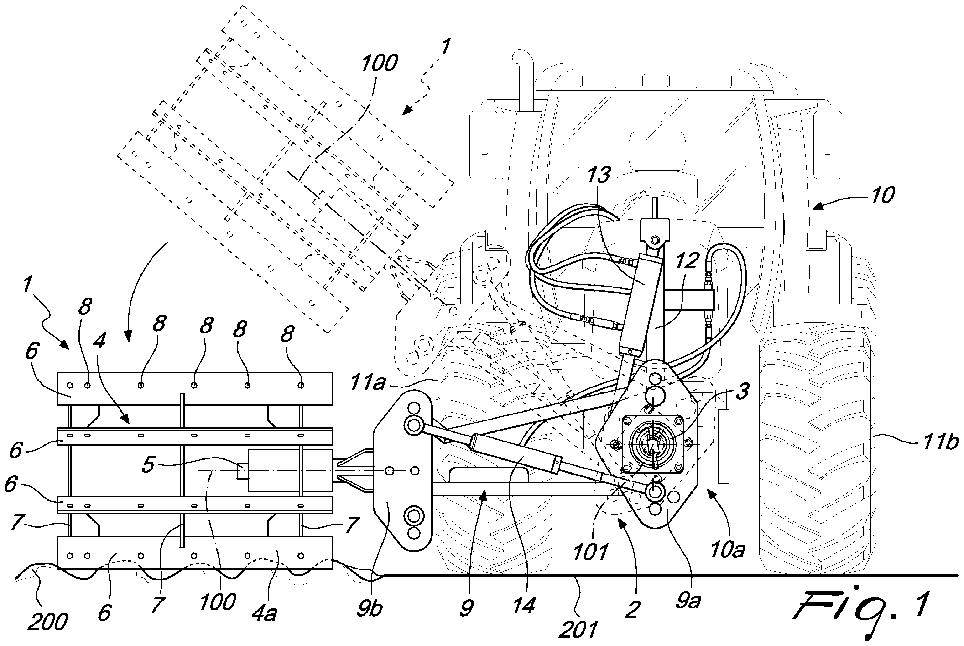

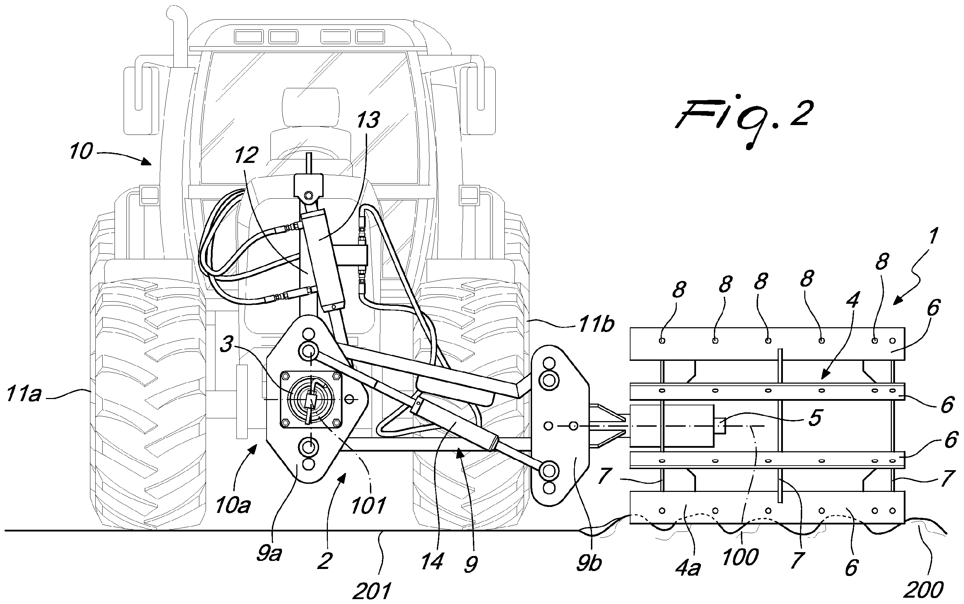

According to the present invention, the working body 4 can rotate on command about an articulation axis 101 that is substantially parallel to the advancement direction of the farming tractor 10 in order to move between a first condition of use (shown in Figure 1), in which the active portion 4a of the working body 4 is arranged laterally to a first side 11a of the farming tractor 10, and a second working condition (shown in Figure 2), in which the active portion 4a of the working body 4 is arranged laterally with respect to the other side 11b of the farming tractor 10.

With reference to the embodiment shown in the figures, the agricultural apparatus 1 comprises a rotary harrow.

Specifically, the rotary harrow has a working portion that comprises elongated bodies that are extended and arranged at least partially on a substantially cylindrical surface that is extended around the axis 100.

By way of example, such elongated bodies can comprise for example peripheral bars 6, which will be described better hereinafter.

As an alternative, the agricultural apparatus can comprise a roller provided with an external side wall that defines a continuous surface.

According to the present invention, in order to allow the movement of the working body 4 from the first condition of use to the second condition of use and vice versa, it is possible to provide movement means, constituted by a hydraulic actuator 13, which act between an abutment body 12 that is integral with the farming tractor 10 and the supporting structure 2.

Advantageously, as shown in the figures, the working body 4 is arranged, in the condition or conditions of use, entirely laterally to the farming tractor 10.

Preferably, the working body 4 comprises a cage-like roller.

The cage-like roller can be constituted by a plurality of peripheral bars 6, which are arranged around the rotation axis 100 and are supported by two or more rings or disks 7.

The peripheral bars 6 can be extended parallel to the rotation axis 100 or can be inclined and can have flat or round cross-sections.

Advantageously, the peripheral bars 6 can be associated, by way of detachable fixing means, with blade-like bodies or with flattening or shredding elements, depending on the type and the characteristics of the soil to be worked.

In this regard, the peripheral bars 6 can define, along their extension, openings or holes 8 to which respective supporting bars of the blade-like bodies or of the flattening or shredding elements are to be fixed for example by means of screws and nuts.

According to the present invention, the working body 4 is mounted freely, about the rotation axis 100, on a coupling body 5 that is supported by the supporting structure 2.

However, nothing forbids the possibility to connect functionally the working body 4 to motor means, constituted for example by a hydraulic motor, which are adapted to rotate it about the respective rotation axis 100.

According to the present invention, the supporting structure 2 comprises a first supporting element 9a, which is coupled directly to the coupling portion 3 and is connected kinematically, by means of an articulation assembly 9, to a second supporting element 9b, which in turn supports the coupling body 5.

According to the present invention, the articulation assembly 9 is provided furthermore with an adjustment actuator, constituted by a hydraulic cylinder 14, which is intended to adjust the inclination of the rotation axis 100 with respect to the resting plane of the farming tractor 10.

In greater detail, the working body 4, at least in the condition of use, is arranged so as to act, with its active portion 4a, at a region of soil to be worked 201 that has already undergone a plowing process while the farming tractor 10 passes over a region of soil 200 that is arranged laterally to the region to be worked and has not yet undergone the plowing process.

If the agricultural apparatus 1 comprises a roller, it can be used by associating it for example with a sowing machine towed by the farming tractor.

In this case, the roller is intended to act, with its active portion 4a, at a region of soil to be worked 201 that has already undergone a sowing process, while the farming tractor 10 passes over a region of soil 200 that is arranged laterally to the region to be worked and has not yet undergone the sowing process.

The present invention relates to a farming machine that comprises a farming tractor 10 associated, at the front region 10a, with an agricultural apparatus 1 according to the characteristics described above.

Advantageously, the farming tractor 10 of the farming machine is associated with a plow in a rear region.

According to a further embodiment, the farming tractor 10 of the farming machine is associated with a sowing machine in a rear region.

In particular, the plow (or sowing machine) acts on a region of the soil to be plowed 200 that is arranged laterally with respect to a region of the soil that has already been plowed (or sown) 201 on which the rotary harrow (or the roller) that constitutes the agricultural apparatus 1 is intended to act.

Use of the agricultural apparatus 1 according to the invention is evident from what has been described above.

The rotary harrow is applied to a farming tractor 10, i.e., to a tractor, at a front portion 10a thereof, while the same farming tractor 10 is connected to a plow at the rear.

The working body 4 of the rotary harrow 1 is moved in each instance laterally to the farming tractor 10 on the side where the soil is already plowed, so as to allow, simultaneously with the plowing, also the flattening and shredding of the plowed soil.

Obviously, when the farming tractor 10 reverses its travel direction, it turns the plow and the working body about the articulation axis 101.

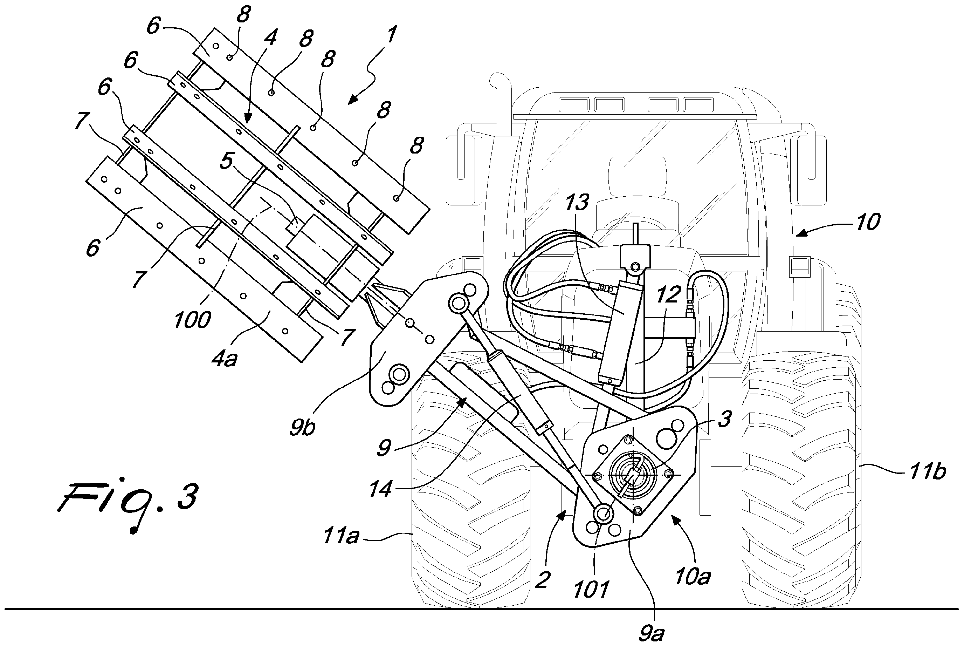

According to the present invention, during the travel of the farming tractor 10, the working body 4 can be moved to an intermediate condition (shown in Figure 3) between the first and second condition of use, in order to allow the operator to see the road and at the same time limit the lateral space occupation of the farming machine.

All the characteristics of the invention indicated above as advantageous, convenient and the like may also be omitted or be replaced with equivalents, as long as the scope of the appended claims remains.

The invention thus conceived is susceptible of numerous modifications and variations, as long as the scope of the appended claims remains.

In practice it has been found that the invention has achieved its intended aim and objects in all of its embodiments.

In particular, the use of the rotary harrow according to the invention allows to perform flattening simultaneously with plowing, with an evident saving from the point of view of time and of the use of the farming tractor.

In practice, the materials used, as well as the contingent shapes and dimensions, may be any according to requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A farming machine and an agricultural apparatus (1), said farming machine comprising a farming tractor (10) associated, at the front region (10a), with said agricultural apparatus (1), said agricultural apparatus comprising a supporting structure (2) that is associated with a coupling portion (3) defined at the front region (10a) of a farming tractor (10), said supporting structure (2) supporting, so that it can rotate about a rotation axis (100), at least one working body (4), said rotation axis (100) being extended, at least in a condition of use of said agricultural apparatus (1), substantially parallel to the soil to be worked and substantially at right angles to the advancement direction of said farming tractor (10), said at least one working body (4) comprising at least one active portion (4a) that is arranged laterally to said farming tractor (10) and having a substantially cylindrical elongated shape that is extended longitudinally substantially parallel to said rotation axis (100), said working body (4) being rotationally movable on command about an articulation axis (101) that is substantially parallel to the advancement direction of said farming tractor (10) in order to move between a first condition of use, in which said active portion (4a) of said working body (4) is arranged laterally with respect to a first side (11a) of said farming tractor (10), and a second working condition, in which said active portion (4a) of said working body (4) is arranged laterally with respect to the other side (11b) of said farming tractor (10), wherein a hydraulic actuator (13) is provided between an abutment body (12) that is integral with the farming tractor (10) and the supporting structure (2) to move the working body (4) between the first condition of use and the second condition of use, wherein the working body (4) is movable to an intermediate condition between the first and second condition of use in order to allow the operator to see the road and at the same time limit the lateral space occupation of the farming machine and wherein the working body (4) is mounted freely, about the rotation axis (100), on a coupling body (5) that is supported by the supporting structure (2), said supporting structure (2) comprises a first supporting element (9a), which is coupled directly to the coupling portion (3) and is connected kinematically, by means of an articulation assembly (9), to a second supporting element (9b), which in turn supports the coupling body (5) wherein the articulation assembly (9) comprises a hydraulic cylinder (14), **characterized in that** said hydraulic cylinder (14) is configured to adjust the inclination of the rotation axis (100) with respect to the resting plane of the farming tractor (10).

2. The farming machine and the agricultural apparatus (1), according to claim 1, **characterized in that** said agricultural apparatus (1) comprises a rotary harrow.

3. The farming machine and the agricultural apparatus (1), according to claim 1, **characterized in that** said agricultural apparatus (1) comprises a roller provided with an external side wall that defines a continuous surface.

4. The farming machine and the agricultural apparatus (1), according to one or more of the preceding claims, **characterized in that** said working body (4) is arranged, in said condition of use, completely laterally to said farming tractor (10).

5. The farming machine and the agricultural apparatus (1) according to one or more of the preceding claims, **characterized in that** said working body (4) comprises a cage-like roller.

6. The farming machine and the agricultural apparatus (1), according to one or more of the preceding claims, **characterized in that** said working body (4) is mounted so that it is free about said rotation axis (100) on a coupling body (5) that is supported by said supporting structure (2).

7. The farming machine and the agricultural apparatus (1), according to one or more of the preceding claims, **characterized in that** said working body (4) is functionally connected to motor means adapted to rotate it about the respective rotation axis (100).

8. The farming machine and the agricultural apparatus (1), according to one or more of the preceding claims, **characterized in that** said farming tractor (10) is associated in a rear region with a plow.

## Patentansprüche

1. Eine Landmaschine und eine landwirtschaftliche Vorrichtung (1), wobei die Landmaschine einen landwirtschaftlichen Traktor (10) umfasst, der in einem vorderen Bereich (10a) mit der landwirtschaftlichen Vorrichtung (1) verbunden ist, wobei die landwirtschaftliche Vorrichtung eine tragende Struktur (2) umfasst, die mit einem Kopplungsabschnitt (3) verbunden ist, welcher im vorderen Bereich (10a) eines landwirtschaftlichen Traktors (10) bestimmt ist, wobei die tragende Struktur (2) drehbar um eine Drehachse (100) mindestens einen Arbeitskörper (4) trägt, wobei die Drehachse (100) sich mindestens in einem Nutzungszustand der landwirtschaftlichen Vorrichtung (1) im Wesentlichen parallel zu dem zu bearbeitenden Boden und im Wesentlichen in rechten Winkeln zur Richtung der Vorwärtsbewegung des landwirtschaftlichen Traktors (10) erstreckt, wobei der mindestens eine Arbeitskörper (4) mindestens einen aktiven Abschnitt (4a) umfasst, der seitlich zu dem landwirtschaftlichen Traktor (10) angeordnet ist und eine im Wesentlichen zylindrische langgestreckte Form hat, die sich in Längsrichtung im Wesentlichen parallel zu der Drehachse (100) erstreckt, wobei der Arbeitskörper (4) auf Befehl drehbar, um eine Gelenkachse (101) beweglich ist, die im Wesentlichen parallel zur Richtung der Vorwärtsbewegung des landwirtschaftlichen Traktors (10) ist, um sich zwischen einem ersten Nutzungszustand in welchem der aktive Abschnitt (4a) des Arbeitskörpers (4) seitlich zu einer ersten Seite (11a) des landwirtschaftlichen Traktors (10) angeordnet ist und einen zweiten Arbeitszustand zu bewegen, in welchem der aktive Abschnitt (4a) des Arbeitskörpers (4) seitlich zur anderen Seite (11b) des landwirtschaftlichen Traktors (10) angeordnet ist, wobei ein hydraulisches Antriebselement (13) zwischen einem Widerlagerkörper (12), der integral mit dem landwirtschaftlichen Traktor (10) ist und der tragenden Struktur (2) angebracht ist, um den Arbeitskörper (4) zwischen dem ersten Nutzungszustand und dem zweiten Nutzungszustand zu bewegen, wobei der Arbeitskörper (4) in einen intermediären Zustand zwischen dem ersten und dem zweiten Nutzungszustand beweglich ist, um es dem Bediener zu ermöglichen, die Straße zu sehen und gleichzeitig den seitlichen Platzbedarf der landwirtschaftlichen Maschine zu begrenzen und wobei der Arbeitskörper (4) frei um die Drehachse (100) an einem Kopplungskörper (5) montiert ist, der von der tragenden Struktur (2) getragen ist, wobei die tragende Struktur (2) ein erstes tragendes Element (9a) umfasst, welches direkt mit dem Kopplungsabschnitt (3) gekoppelt und kinematisch über einen Gelenkaufbau (9) mit einem zweiten tragenden Element (9b) verbunden ist, welches wiederum den Kopplungskörper (5) trägt, wobei der Gelenkaufbau (9) einen Hydraulikzylinder (14) umfasst, **dadurch gekennzeichnet, dass** der Hydraulikzylinder (14) ausgebildet ist, um die Neigung der Drehachse (100) im Verhältnis zur Auflageebene des landwirtschaftlichen Traktors (10) anzupassen.

2. Die Landmaschine und die landwirtschaftliche Vorrichtung (1) gemäß Anspruch 1, **dadurch gekennzeichnet, dass** die landwirtschaftliche Vorrichtung (1) eine Spatenrollegge umfasst.

3. Die Landmaschine und die landwirtschaftliche Vorrichtung (1) gemäß Anspruch 1, **dadurch gekennzeichnet, dass** die landwirtschaftliche Vorrichtung (1) eine Rolle umfasst, die mit einer externen Seitenwand versehen ist, welche eine durchgehende Oberfläche bestimmt.

4. Die Landmaschine und die landwirtschaftliche Vorrichtung (1) gemäß einem oder mehreren der obigen Ansprüche, **dadurch gekennzeichnet, dass** der Arbeitskörper (4) im Nutzungszustand vollständig seitlich zum landwirtschaftlichen Traktor (10) angeordnet ist.

5. Die Landmaschine und die landwirtschaftliche Vorrichtung (1) gemäß einem oder mehreren der obigen Ansprüche, **dadurch gekennzeichnet, dass** der Arbeitskörper (4) eine käfigartige Rolle umfasst.

6. Die Landmaschine und die landwirtschaftliche Vorrichtung (1) gemäß einem oder mehreren der obigen Ansprüche, **dadurch gekennzeichnet, dass** der Arbeitskörper (4) um die Drehachse (100) frei an einem Kopplungskörper (5) montiert ist, der von der tragenden Struktur (2) getragen ist.

7. Die Landmaschine und die landwirtschaftliche Vorrichtung (1) gemäß einem oder mehreren der obigen Ansprüche, **dadurch gekennzeichnet, dass** der Arbeitskörper (4) funktional mit Motormitteln verbunden ist, die ausgebildet sind, um ihn um die entsprechende Drehachse (100) zu drehen.

8. Die Landmaschine und die landwirtschaftliche Vorrichtung (1) gemäß einem oder mehreren der obigen Ansprüche, **dadurch gekennzeichnet, dass** der landwirtschaftliche Traktor (10) in einem hinteren Bereich mit einem Pflug verbunden ist.

## Revendications

1. Machine agricole et appareil agricole (1), ladite machine agricole comportant un tracteur agricole (10) associé, au **niveau de la zone avant** (10a), audit appareil agricole (1), ledit appareil agricole (1) comportant une structure de support (2) qui est associée à une partie d'accouplement (3) définie sur la zone avant (10a) d'un tracteur agricole (10), ladite structure de support (2) supportant, de sorte qu'elle peut tourner autour d'un axe de rotation (100), au moins un corps de travail (4), ledit axe de rotation (100) s'étendant, au moins dans un état d'utilisation dudit appareil agricole (1), de manière sensiblement parallèle au sol à travailler et pratiquement à angles droits par rapport à la direction d'avance dudit tracteur agricole (10), ledit au moins un corps de travail (4) comportant au moins une partie active (4a) qui est agencée latéralement audit tracteur agricole (10) et ayant une forme allongée sensiblement cylindrique qui s'étend longitudinalement de manière sensiblement parallèle audit axe de rotation (100), ledit corps de travail (4) étant mobile en rotation sur instruction autour d'un axe d'articulation (101) qui est sensiblement parallèle à la direction d'avance dudit tracteur agricole (10) afin de se déplacer entre un premier état de travail, dans lequel ladite partie active (4a) dudit corps de travail (4) est agencée latéralement par rapport à un premier côté (11a) dudit tracteur agricole (10), et un second état de travail, dans lequel ladite partie active (4a) dudit corps de travail (4) est agencée latéralement par rapport à l'autre côté (11b) dudit tracteur agricole (10), dans lesquels un actionneur hydraulique (13) est agencé entre un corps de butée (12) qui est solidaire du tracteur agricole (10) et de la structure de support (2) pour déplacer le corps de travail (4) entre le premier état d'utilisation et le second état d'utilisation, dans lesquels le corps de travail (4) peut être amené à un état intermédiaire entre les premier et second états d'utilisation afin de permettre à l'opérateur de voir la route et en même temps de limiter l'occupation d'espace latéral de la machine agricole et dans lesquels le corps de travail (4) est monté librement, autour de l'axe de rotation (100), sur un corps d'accouplement (5) qui est supporté par la structure de support (2), ladite structure de support (2) comporte un premier élément de support (9a), qui est directement couplé à la partie d'accouplement (3) et est relié cinématiquement, au moyen d'un ensemble d'articulation (9), à un second ensemble d'articulation (9b), qui supporte à son tour le corps d'accouplement (5), dans lesquels l'ensemble d'articulation (9) comporte un vérin hydraulique (14), **caractérisés en ce que** ledit vérin hydraulique (14) est configuré pour régler l'inclinaison de l'axe de rotation (100) par rapport au plan d'appui du tracteur agricole (10).

2. Machine agricole et appareil agricole (1) selon la revendication 1, **caractérisés en ce que** ledit appareil agricole (1) comporte une herse rotative.

3. Machine agricole et appareil agricole (1) selon la revendication 1, **caractérisés en ce que** ledit appareil agricole (1) comporte un rouleau muni d'une paroi latérale externe qui définit une surface continue.

4. Machine agricole et appareil agricole (1) selon une ou plusieurs des revendications précédentes, **caractérisés en ce que** ledit corps de travail (4) est agencé, dans ledit état d'utilisation, entièrement latéralement par rapport audit tracteur agricole (10).

5. Machine agricole et appareil agricole (1) selon une ou plusieurs des revendications précédentes, **caractérisés en ce que** ledit corps de travail (4) comporte un rouleau analogue à une cage.

6. Machine agricole et appareil agricole (1) selon une ou plusieurs des revendications précédentes, **caractérisés en ce que** ledit corps de travail (4) est monté de sorte qu'il est libre autour dudit axe de rotation (100) sur un corps d'accouplement (5) qui est supporté par ladite structure de support (2).

7. Machine agricole et appareil agricole (1) selon une ou plusieurs des revendications précédentes, **caractérisés en ce que** ledit corps de travail (4) est fonctionnellement relié à des moyens moteurs adaptés pour le faire tourner autour de l'axe de rotation (100) respectif.

8. Machine agricole et appareil agricole (1) selon une ou plusieurs des revendications précédentes, **caractérisés en ce que** ledit tracteur d'agriculture (10) est associé, dans une zone arrière, à une charrue.
